(19)

Europäisches Patentamt

European Patent Office

Office européen des brevets

(11) **EP 2 320 593 A1**

(12) **EUROPEAN PATENT APPLICATION**

(43) Date of publication:
**11.05.2011 Bulletin 2011/19**

(51) Int Cl.:
*H04L 1/20* (2006.01)      *H04B 1/10* (2006.01)

(21) Application number: **09306070.5**

(22) Date of filing: **09.11.2009**

| | |
|---|---|
| (84) Designated Contracting States:<br>**AT BE BG CH CY CZ DE DK EE ES FI FR GB GR HR HU IE IS IT LI LT LU LV MC MK MT NL NO PL PT RO SE SI SK SM TR**<br>Designated Extension States:<br>**AL BA RS**<br><br>(71) Applicant: **ST-Ericsson SA**<br>**1228 Plan-les-Ouates (CH)** | (72) Inventors:<br>• **Sesia, Stefania**<br>  **06330 Roquefort les Pins (FR)**<br>• **Ancora, Andrea**<br>  **06300, NICE (FR)**<br><br>(74) Representative: **Zapalowicz, Francis**<br>**Casalonga & Partners**<br>**Bayerstrasse 71/73**<br>**80335 München (DE)** |

(54) **Method to estimate a signal to interference plus noise ratio based on selection of the samples and corresponding processing system**

(57)      Method for estimating a signal to interference plus noise ratio, called SINR, of an incident signal on a time interval, comprising receiving samples of said incident signal during said time interval and determining said SINR (204, 405) from said received samples using an average calculation (202, 401) and a variance calculation (203, 404), The determining step comprises selecting (201, 402) a set of samples from said received samples and performing said average calculation and/or said variance calculation (202, 203, 401, 404) by using said selected set of samples only.

## FIG.4

COARSE Calculation of the mean of one slot — 401

Selection of samples — 402

Identification of a groups of sample with a known probability function — 403

Calculation of the variance and the average of the sample selected — 404

SINR — 405

EP 2 320 593 A1

**Description**

The invention relates to digital signal processing and more particularly to an estimation of the signal to noise plus interference ratio (SINR) in a digital modulated signal.

A non limitative application of the invention is directed to the wireless communication field, in particular the HSDPA (High Speed Downlink Packet Access) and 3G standards. HSDPA is a standard that enables a high data throughput of the downlink. This is made possible by link adaptation and the use of turbo code for FEC (Forward Error Correction).

Link adaptation comprises the adaptation of the modulation and coding rate used for the transmission. The adaptation for the downstream link is done by the base station. It is based on the CQI (Channel Quality Information) feedback reported to the base station by the mobile phone. The CQI calculation is partially based on the SINR estimation of the pilot sequence received by the mobile phone.

FEC allows the receiver to detect and correct errors without the need to ask the sender for additional data. The use of turbo code enables a better detection and correction. To realize the turbo decoding the mobile is using well-known variables called "soft bits" expressing a trust degree. The soft bit calculation is based on SINR estimation of the data sequence received by the mobile phone.

Therefore, the SINR estimation plays an important role and a correct SINR estimation enables a good quality of service of the HSDPA link.

In the prior art, several algorithms are proposed to estimate the SINR.

One of these algorithms is based on the maximum likelihood. According to the position of the received signal in a constellation, the value of the data sent is identified according to a maximum likelihood. From this value, the average value of the amplitude of data is determined. Then, a variance estimator based on the pilot sequence is used to determine the SINR.

The general drawback of these processes is the miss estimation of the SINR. In view of the foregoing, it is described here a method and a system enabling a better SINR estimation without any significant rise of the complexity.

It is actually proposed a method based on the estimation done only on a selected amount of samples. In particular, only the most reliable samples are selected for the SINR estimation.

According to a first aspect, it is proposed a method for estimating a signal to interference plus noise ratio, called SINR, of an incident signal on a time interval, comprising receiving samples of said incident signal during said time interval and determining said SINR from said received samples using an average calculation and a variance calculation.

According to a general feature, the said determining step comprises selecting a set of samples from said received samples and performing said average calculation and/or said variance calculation by using said selected set of samples only.

Only the most reliable sample is kept and the probability of miss identification is drastically diminished, yielding to a better SINR estimation.

In an embodiment, the said incident signal is a modulated signal and both said average calculation and said variance calculation are performed using said selected set of samples only, maximum likelihood values of said samples obtained from the position of said samples in the modulation constellation and a known sequence of transmitted reference samples.

In another embodiment, the said selection step is performed iteratively until the difference between the current average value of samples calculated on a current selected set of samples and the preceding average value of samples calculated on the preceding selected set of samples is smaller than a threshold.

In another embodiment, said selecting step comprises withdrawing samples subjected to interference intersymbol for obtaining at least one group of samples, and said variance calculation is based on curve fitting with minimum squared error on said at least one group of samples.

The identification on a group suppresses the problem of miss identification of a single sample and the withdrawn of samples subjected to interference intersymbol enables to reduce the contribution of interference in noise calculation which overestimates this calculation. Therefore, a more accurate estimation of SINR with the curve fitting method and the selection is realized.

Advantageously, the curve used for curve fitting is a Gaussian.

According to another embodiment, a supplementary average calculation of at least one group of samples is performed using the result of said variance calculation.

Said curve fitting step and said supplementary average calculation are advantageously performed iteratively, a current variance calculation using the result of a preceding supplementary average calculation.

According to an another aspect, it is proposed a device for estimating a signal to interference plus noise ratio, called SINR, of an incident signal on a time interval, comprising:

    reception means for receiving samples of said incident signal during said time interval

processing means for determining SINR from said received samples, said processing means comprising first calculation means for performing an average calculation and second calculation means for performing a variance calculation.

According to a general feature of this aspect, said processing means comprise selection means for selecting a set of samples from said received samples and said first calculation and/or said second calculation means are configured to use said selected set of samples only.

In an embodiment, the incident signal is a modulated signal, and said first and second calculation means are configured to use said selected set of samples, maximum likelihood values of said samples obtained from the position of said samples in the modulation constellation and a known sequence of transmitted reference samples.

In another embodiment, the selection means comprise comparison means for comparing the difference between a current average value of samples calculated on a current selected set of samples and a preceding average value of samples calculated on a preceding selected set of samples with a threshold and control means configured to activate said selection means until said difference is smaller than said threshold.

In another embodiment, the selection means are configured to withdraw the sample subjected to interference intersymbol for obtaining at least one group of samples, and the second calculation means comprise means for curve fitting said at least one group of samples with minimum squared error.

According to another embodiment, the means for curve fitting are configured to curve fit the said at least one group of samples with a Gaussian distribution.

According to another embodiment, the processing means comprises third calculation means for performing a supplementary average calculation of at least one group of samples using the variance calculated by said second calculation means.

The processing means further comprises advantageously control means for iteratively activating said means for curve fitting and said third calculation means.

According to another aspect, it is proposed a wireless apparatus comprising a device as defined above.

Other advantages and features of the invention will appear on examining the detailed description of embodiments, these being in no way limiting, and of the appended drawings, in which:

- figure 1 illustrates a general processing applied to a digital sequence in a HSDPA wireless communication system;
- figure 2 illustrates diagrammatically a first embodiment of a method according to the invention;
- figure 3 illustrates diagrammatically a first embodiment of a device according to the invention;
- figure 4 illustrates another embodiment of a method according to the invention;
- figures 5 and 6 illustrate results related to the embodiment of figure 4;
- figure 7 illustrates another embodiment of a device according to the invention;

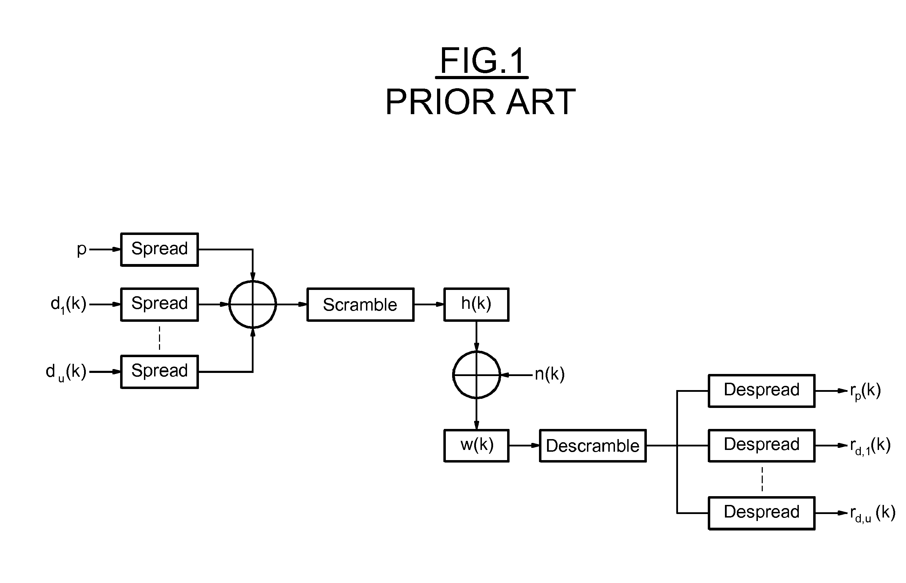

Figure 1 illustrates a conventional process applied to the digital sequences sent and received in a wireless communication system according to the HSDPA standard.

As it is well known, symbols are sent within successive frames, each frame being subdivided in several slots. Each slot contains a specified number of symbols, each symbol comprising a predetermined number of chips.

The pilot sequence p and the symbol sequence of each user $s_1, s_2..., s_u$ (where u is the number of users) are spread with their own spreading codes, summed up and scrambled. The channel is denoted as h and the white Gaussian noise as n. An equalizer w is implemented before descrambling and despreading. The received pilot sequence and the received sequences of chips after descrambling and despreading are called respectively $r_p$ and $r_d, 1...r_d, u$. Therefore, according to figure 1, the generic formula for the received sequence of chips $r_{d,u}$ can be written as:

$$r_{d,u}[k] = d_u \left[ k \left( \sum_{m=1}^{SF} \Re\{g_d[k+m]\} + ISI_{d,u}[k+m] \right) + ISI[k] + \tilde{n}[k] \right. \qquad (1)$$

In this formula, the data symbol $d_u[k]$, corresponding to the k-th chip of user u, is weighted with the principal tap $g_d[k+m]$ of the convolution of the channel and the equalizer for time instant 'k'. The constructive intersymbol interference is given by the pre- and post-cursors $ISI_{d,u}[k+m]$ and is considered as an useful term. However, its contribution is in general negligible. The convolution of the channel, and the equalizer for the chip k is realized considering a spreading factor SF=16. The term $ISI[k]+\tilde{n}[k]$ represents the filtered noise and the intersymbol interference.

In general, several codes are associated to one user. If Ncodes is the number of codes allocated to one user, and with a spreading factor of 16, each group of 10 symbols (one slot) contains 10*16*Ncodes chips.

According to the prior art, in the maximum likelihood process, used for determining the SINR, the received chips are processed as followed; on the basis of a procedure of derotation in order to calculate an average value $\overline{A}$ of their amplitude:

$$r_{derot}[k] = r_d[k] \cdot r_{ref}^*[k]$$
$$r_{ref}[k] \in \left\{ (1+j)/\sqrt{2}; (1-j)/\sqrt{2}; (-1+j)/\sqrt{2}; (-1-j)/\sqrt{2} \right\}$$
$$A[k] = \Re e\{r_{derot}[k]\} \qquad (2)$$
$$\overline{A} = \frac{1}{160 N_{codes}} \sum_{k=1}^{160 N_{codes}} A[k]$$

Where,

- $r_d[k]$ is the amplitude of the received chip k associated to the user d
- $r_{ref}[k]$ corresponds to the maximum likelihood value of $r_d[k]$ and the value of $r_{ref}[k]$ is obtained from a hard decision and depends on the quadrant where the receiving signal is belonging. In other words, the value $r_{ref}[k]$ corresponds to the position of $r_d[k]$ in the constellation.
- * is the conjugate complex
- Re{} is the real part operator
- A is the average value of A[k] calculated on 160xNcodes chips.

Then SINR calculation can be done by a ratio between the average value squared $\overline{A}^2$ and a variance value involving the average value $\overline{A}$ and the pilot sequence. For one slot, the SINR with maximum likelihood identification can be computed by:

$$SINR_{ML} = \frac{\overline{A}^2}{\dfrac{1}{160 N_{codes}} \displaystyle\sum_{k=1}^{160 N_{codes}} \left| r_p[k] - \overline{A} \cdot p[k] \right|^2} \qquad (3)$$

Where:

- p[k] are the transmitted chips of the pilot sequence
- $r_p[k]$ are the received chips of the pilot sequence

The problem of this method is the overestimation of the SINR particularly in low SINR region. The maximum likelihood method is biased because the maximum likelihood-based identification of one sample chip can be false. In order to overcome the problem a modified maximum likelihood method is proposed based only on a selected amount of samples, and more precisely the samples that are the most reliable.

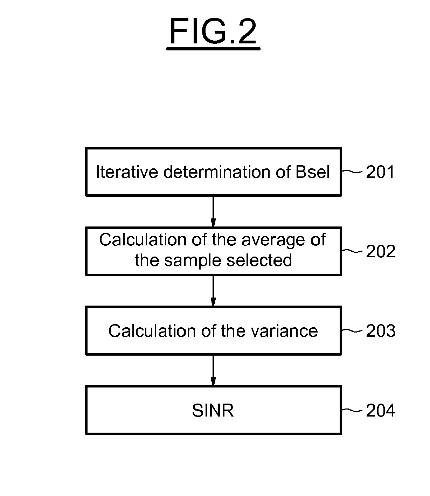

Figure 2 illustrates an embodiment of such a modified likelihood method.

In fact, the average value mentioned in (2) above will be calculated only on a selected group of samples $B_{sel}$. Here, $B_{sel}$ is obtained iteratively after the derotation of 160xNcodes symbols (step 201). More precisely, $B_{sel,n}$ denotes the current group of samples selected at iteration n. Its samples are described by:

$$B_{sel,n} = \left\{ A[k], with\ k\ such\ that\quad \left| r_p[k] - a_{n-1} \right|^2 \le r_{n-1}^2 \right\} \qquad (4)$$

where rp[k] is the received chips of the pilots sequence, A[k] is defined in (2) above, $a_{n\_1}$ is the average of the A[k] $\in B_{sel,\ n-1}$ defined as follows

$$a_{n-1} = \frac{1}{N_{sel}} \sum_{B_{sel,n-1}} A[k] \quad and \quad r_{n-1} = \frac{a_{n-1}}{2} \tag{5}$$

and $N_{sel}$ is the number of sample of the previous group $B_{sel,n-1}$.

The samples selected lie within the complex plan on a disc centered on $a_n$ and with a radius $r_n$. At the initialization step, all samples A[k] are considered. This selection is easy to implement and enables to select samples close to the average, which are less affected by the noise.

The iterations are going on until the difference $\Delta = a_n - a_{n-1}$ is lower than a predefined threshold $\delta$. For a $\delta$ = 0.01, only one or two iterations are necessary to reach the desired threshold.

Then, a step 202 of average calculation is performed. The average of the selected group of samples $B_{sel}$ can be calculated as following: $\overline{A}_{sel} = \frac{1}{N_{sel}} \sum_{B_{sel}} A[k]$.

$\overline{A}_{sel}$ represents also an attenuation coefficient of the channel. Finally, a step 203 of variance calculation is performed. The variance can be computed with the following formula: $\frac{1}{160 N_{codes}} \sum_{k=1}^{160 N_{codes}} \left| r_p[k] - \overline{A}_{sel} \cdot p[k] \right|^2$

The SINR for one slot can be then easily calculated (step 204) as the following ratio:

$$SINR_{MML} = \frac{\left(\overline{A}_{sel}\right)^2}{\frac{1}{160 N_{codes}} \sum_{k=1}^{160 N_{codes}} \left| r_p[k] - \overline{A}_{sel} \cdot p[k] \right|^2} \tag{6}$$

In other words, this method of Modified Maximum Likelihood (MML) enables a more accurate SINR estimation than the maximum likelihood (ML) method according to the prior art. This method comprises the adding of one selection step before the process of maximum likelihood. The selection is easy to compute based on an iterative process (cf. (4)).

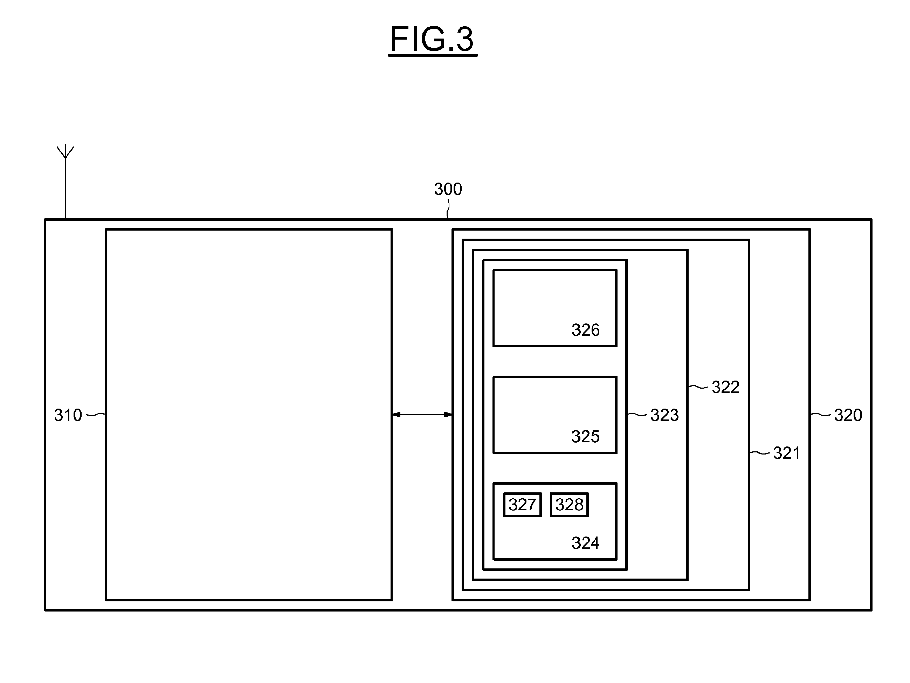

Figure 3 illustrates diagrammatically a wireless apparatus including a device capable of implementing a modified maximum likelihood method according to the invention. The apparatus comprises conventionally an antenna 309, an analog stage 310 and a digital stage 320. The antenna is able to emit and/or receive analog modulated signals. The analog stage comprises conventional means for analog modulation and demodulation.

The digital stage includes, for example, a base-band processor 321. The digital stage comprises a device 322 for estimating a signal to interference plus noise ratio. This device may be realized by software modules within the base-band processor.

The device comprises reception means for receiving the digital samples of the incident signal. The device also comprises processing means 323 for determining SINR from said received samples. The processing means 323 comprise selection means 324 for selecting a set of samples from said received samples, a first calculation means 325 for performing an average calculation and second calculation means 326 for performing a variance calculation. Said first calculation and/or said second calculation means are configured to use said selected set of samples only.

According to one embodiment, first calculation and/or said second calculation means use the maximum likelihood values of said selected set of samples. The maximum likelihood is obtained from the position of the samples in the modulation constellation. With the maximum likelihood value and a known sequence of transmitted reference samples, the first calculation means and/or second calculation means can perform a variance and average calculation of said selected set of samples.

The selection means can comprise comparison means 327. They can also comprise control means 328 configured to activate said selection means iteratively. During each selection, the difference between a current average value of samples calculated on a current selected set of samples and a preceding average value of samples calculated on a preceding selected set of samples is compared by the means of comparison 327 with a threshold. The selection is iterated by the control means 328 until the said difference is smaller than said threshold.

The processing means and several means described above may be realized by software modules within the base-band processor.

Another improvement of the SINR calculation with respect to the conventional ML method is based on curve fitting and is now described.

The curve fitting consists of an identification of the probability density function of the received samples with a reference curve. For exemplary purpose, a Gaussian is chosen as the reference curve to be fitted, but another reference curve can also be used. The curve fitting identification of the probability density function can be based on a Minimum Mean Squared Error.

In this method, according to a first advantage, the risk of a false maximum likelihood identification of one sample is reduced because the curve fitting proposes to identify a probability density function of a group of samples.

According to a second advantage, the calculated SINR is more accurate because only the received samples that are less affected by interference are selected for the curve fitting.

The calculation of the SINR according to curve fitting is applied here to the case of 2-PAM (pulse amplitude modulation containing a mapping of signal with only two levels of amplitude). From the calculation of the SINR of a 2-PAM transmission, the SINR of QPSK transmission used in HSDPA can be deducted. Actually, the QPSK modulation can be seen as the concatenation of two PAM modulations (one for the real part and the other for the imaginary part). The method exposed here can be generalized to the SINR calculation of any QAM modulation transmission by the man of ordinary skill.

In order to enable a fast deduction of QPSK SINR, the 2-PAM (pulse amplitude modulation) received samples are considered with a doubled number of samples. Let

$$y(ts) = \left( y[1], y[2], ..., y[k], ... y[2 \cdot 160 \cdot N_{user}] \right) \quad with \quad k = 1, 2, ... 2 \cdot 160 \cdot N_{codes}$$

be the vector representing all the real and imaginary components of $r_d[k]$ in one slot ts. Each sample y[k] corresponds to the receiving amplitude of one of the two levels used in the 2-PAM.

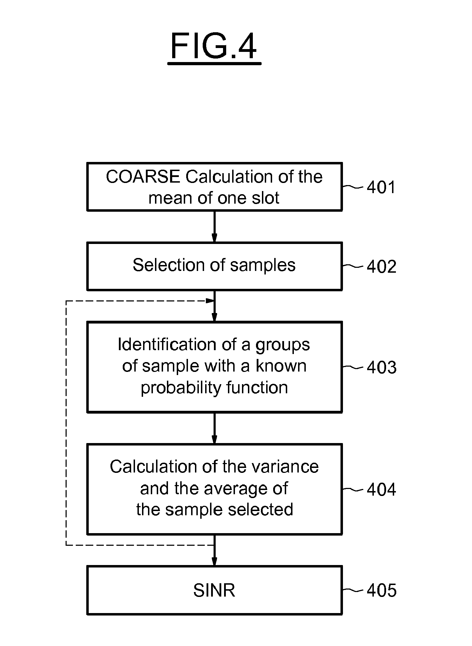

Figure 4 illustrates a flowchart of the process. To sum up, this process contains a step of mean (average) calculation, a step of selection of two groups of samples, and then a determination of the probability density function of the samples of these groups. Subsequently, this probability density function will be identified by curve fitting with a Gaussian distribution whose average and mean squared error will be determined. This determination enables the calculation of the SINR of the samples y[k].

The calculation of the SINR can be made with the samples of one selected group only, whatever the selected group, or on the samples of both selected groups, thus increasing the number of samples.

An example of SINR calculation will be now described using only one group among the two selected groups with reference to figures 4, 5 and 6.

First, a coarse estimation of the mean (average) of the received samples on the slot ts is performed (step 401). The mean $m_0(ts)$ is estimated by simply averaging the absolute value of all the samples y[k] (chips) of the slot ts:

$$m_0(ts) = \frac{\sum_{i=1}^{320 N_{codes}} |y[k]|}{320 N_{codes}} \qquad (7)$$

Then, a selection of samples (402) is performed. To do such, the elements are selected as:

$$Selection = \left\{ y[k], \ such \ that \ \left| y[k] \right| > \theta \right\}, with \ \theta \ set \ such \ that$$

$$\frac{numbers \ of \ samples \ of \ \{Selection\}}{2 N_{codes} 160} \approx 0.25 \qquad (8)$$

Two groups are thus created:

- a first group of samples whose amplitude is greater than θ verifying $y[k] > \theta$
- a second group of samples whose amplitude is smaller than -θ verifying $y[k] < -\theta$

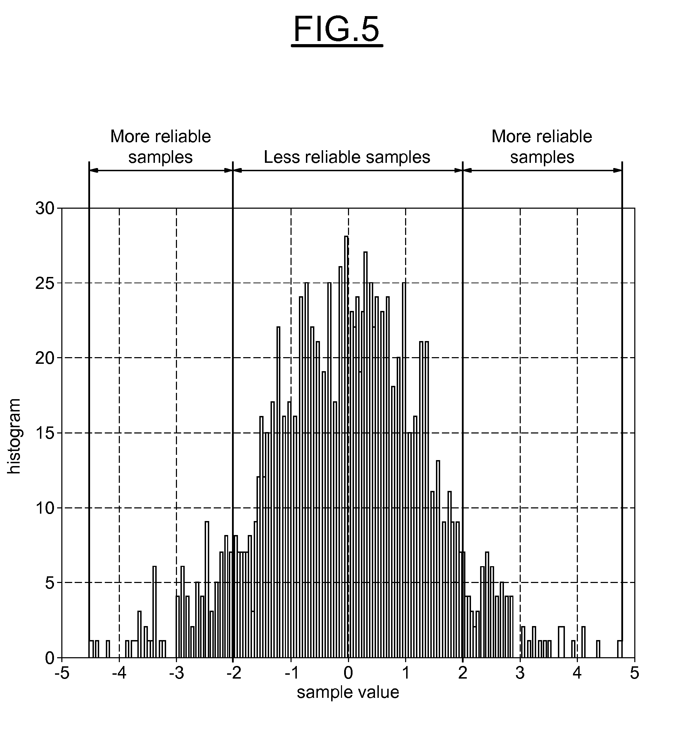

Each of these two groups corresponds to the "more reliable" groups illustrated hereafter in figure 5.

The selection enables a more accurate estimation of SINR. Actually, the samples in of one these two selected groups are less affected by interference. Therefore, in the estimation of SINR, the influence of interference is minimized.

Now, as an example, one of these groups is chosen for the SINR calculation. As it will be explained more in details thereafter, an aim of this method consists in finding the Gaussian that fits the best the probability density function of the samples of this group. And then, the variance of the samples of the groups will be the variance of the found Gaussian curve. More details are now described.

The samples of one this chosen groups are plotted on a histogram in which the horizontal axis corresponds to the amplitude of the sample and the vertical axis corresponds to the number of event.

The histogram of the group of samples is then divided into several bins $C_i=[s_i, s_{i+1}]=[\theta+(i_{-1}).\Delta;\theta+i.\Delta]$ where

$$\Delta = \frac{Max(|y[k]|) - \theta}{N_{bins}}$$ and where Nbins is the number of bins, for example 10.

An empirical probability density function can then be computed by counting how many samples belong to each bin Ci. This is called zi, i.e.

$$z_i = \frac{\sum_{k=1}^{320 N_{codes}} 1\{y[k] \in C_i\}}{320 N_{codes}} \tag{9}$$

Where 1 {.} is the indicator function equal to 1 if the condition into bracket is verified and zero otherwise. This operation provides Nbins empirical points.

The identification, 403, with the Gaussian probability density function that fits the best those empirical points is now described.

As the mean has already been coarsely estimated, the only parameter that needs to be calculated is the mean squared (square root of the variance) of the Gaussian.

The mean squared error between the empirical density function and the Gaussian to be determined is given by the following formula:

$$
\begin{aligned}
J &= \sum_{i=1}^{N_{bins}} \left[ z_i - \Pr\left(y[k] \in C_i\right) \right]^2 \\
&= \sum_{i=1}^{N_{bins}} \left[ z_i - Q\left(\frac{s_i}{\sqrt{\sigma^2}}\right) + Q\left(\frac{s_{i+1}}{\sqrt{\sigma^2}}\right) \right]^2 \\
&= \sum_{i=1}^{N_{bins}} \left[ z_i - Q\left(\frac{s_i}{\sqrt{\sigma^2}}\right) + Q\left(\frac{s_{i+1}}{\sqrt{\sigma^2}}\right) \right]^2 \\
&= \sum_{i=1}^{N_{bins}} \left[ z_i - Q\left(\frac{\theta + (i-1)\Delta - m_0}{\sqrt{\sigma^2}}\right) + Q\left(\frac{\theta + i\Delta - m_0}{\sqrt{\sigma^2}}\right) \right]^2
\end{aligned}
\tag{10}
$$

J is the metric that needs to be minimized. A minimum according to $\sigma^2$ is necessarily verifying the following equation $\frac{\partial J}{\partial \sigma^2} = 0$ which yields to:

$$\sum_{i=1}^{N_{bins}}\left[ z_i - Q\left( \frac{\theta + (i-1)\Delta - m_0}{\sqrt{\sigma^2}} \right) + Q\left( \frac{\theta + i\Delta - m_0}{\sqrt{\sigma^2}} \right) \right] \cdot \left[ f\left(i,\sigma^2\right) - f\left(i-1,\sigma^2\right) \right] = 0$$

$$where \quad f(i,\sigma^2) = (\theta + i\Delta - m_0)e^{\left( -\frac{(\theta + i\Delta - m_0)^2}{2\sigma^2} \right)}$$

$$(11)$$

Since the Q(.) function can be approximated with exponential functions, the most computationally expensive part of this equation can be tabulated and a look up table can be built in order to minimize complexity. By solving this equation, the variance $\sigma_{est}^2$ of the Gaussian probability density function that fits the best the empirical probability density function can be found.

The estimated variance of the received samples y[k] of the group corresponds (404) thus to $\sigma_{est}^2$.

An optional another calculation of average of the selected samples is then possible. This new average calculation is more precise than the coarse calculation. This calculation uses the estimated variance $\sigma_{est}^2$. It can be found by solving the following equation:

$$\sum_{i=1}^{N_{bins}} C_i = Q\left( \frac{\theta - m_1}{\sqrt{\sigma_{est}^2}} \right) \quad \Rightarrow \quad m_1(ts) = \theta - \sqrt{\sigma_{est}^2} Q^{-1}\left( \sum_{i=1}^{N_{bins}} C_i \right) \qquad (12)$$

As previously stated, the inverse of the Q function can be pre-computed and stored in a look-up table.

As seen in figure 4 in dotted line, steps 403 and 404 can be performed iteratively. The number of iterations depends on a compromise between a desired precision on the SINR calculation and the iterative calculation duration.

Finally, the SINR (405) can be obtained from these calculations. The SINR is computed every TTI (Transmission Time Interval) (one TTI = 3 HSDPA slots). Each TTI is lasting 2ms. This yields the possibility of average the SINR over this period. And the SINR for slot ts can be computed as:

$$SINR[ts] = \frac{m1^2[ts-2] + m1^2[ts-1] + m1^2[ts]}{\sigma_{est}^2(ts)} \qquad (13)$$

over the last three slots.

In other words, with a selection easy to compute cf. (8), the SINR estimation is more accurate and the curve fitting method enables the best performance among the other methods as will be stated in the following.

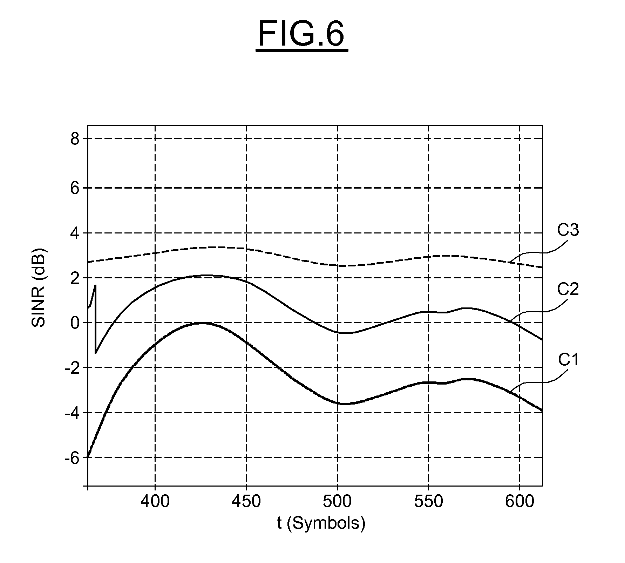

An example of results of a curve fitting process is now illustrated on figure 5 and 6.

On figure 5, an empirical simulation histogram of a 2-PAM received signal with a low SINR (10dB) is illustrated.

The samples of figure 5 in the zone around the value zero are affected by a severe intersymbol interference. It is thus difficult to determine the value of the symbol corresponding to the received sample.

To avoid this problematic zone, the selection (8) as described above enables the distinction of three zones. These three zones can be named: more reliable samples, less reliable samples and more reliable samples. As seen earlier, the curve fitting method uses only the samples selected in at least one of the two groups named "more reliable samples".

In figure 6, three curves are represented each corresponding to different SINR estimation or calculation.

- Curve C 1 corresponds to a calculated reference SINR. The reference SINR can be calculated as follow:

$$r_{d,l}[k] = d_l[k]\left( \sum_{m=1}^{SF} \Re\{g_d[k+m]\} + ISI_{d,l}[k+m] \right) + ISI[k] + \tilde{n}[k] \qquad (14)$$

The main useful part of the data is given by the data symbol $d_1[k]$ weighted with the principal tap $g_{d_l}[k+m]$ of the convolution of the channel and the equalizer for each chip k. The constructive intersymbol interference given by the pre- and post cursors $ISI_{d,l}[k+m]$ is considered as a useful term. However, this contribution is in general negligible.

The distortion is given by the intersymbol interference of other users and the filtered noise.

The computation of the average SINR in one slot:

$$SINR_{ref} = \frac{1}{160 N_{codes}} \sum_{l=1}^{N_{codes}} \sum_{ki=1}^{160} \frac{\left( \sum_{m=0}^{SF-1} \frac{\Re e\{g_d[k+m]\}}{SF} \right)^2}{\left( r_{d,l}[k] - \sum_{m=0}^{SF-1} \frac{\Re e\{g_d[k+m]\}}{SF} d_l[k] \right)^2} \qquad (15)$$

For simplicity each of the 160*Ncodes transmitted chip is called d[k] and the received data $r_d$[k]. The SINR$_{ref}$ can be then written as:

$$SINR_{ref} = \frac{1}{160 \cdot N_{codes}} \sum_{k=1}^{160 \cdot N_{codes}} \frac{(A[k])^2}{(r_d[k] - A[k]d[k])^2} \qquad (16)$$

- Curve C2 corresponds to a SINR estimated with the above described method of curve fitting with only one iteration in the dotted loop of figure 5.
- Curve C3 corresponds to a SINR estimated with a conventional ML (maximum likelihood) method.

The simulation conditions are the following ones:

VA 30, Ior/Ioc=10dB, Ec/Ior=-6dB and Ncodes=5 where:

- VA 30 is corresponding to a wireless channel of a 30km/h moving car,
- Ior/Ioc is a factor representing the division between the energy received from the synchronized base station and the interference base stations,
- Ec/Ior is a factor representing the division between the energy by information compared to the energy received from the synchronized base station.

As illustrated the curve fitting with selection algorithm shows the best performance, i.e. it has the smallest NMSE (Normalized Mean Square Error) with the reference SINR.

In other words, SINR calculated from the curve fitting method (with only one iteration in the dotted loop of figure 3), is the closest to the reference SINR. This SINR is also less overestimated.

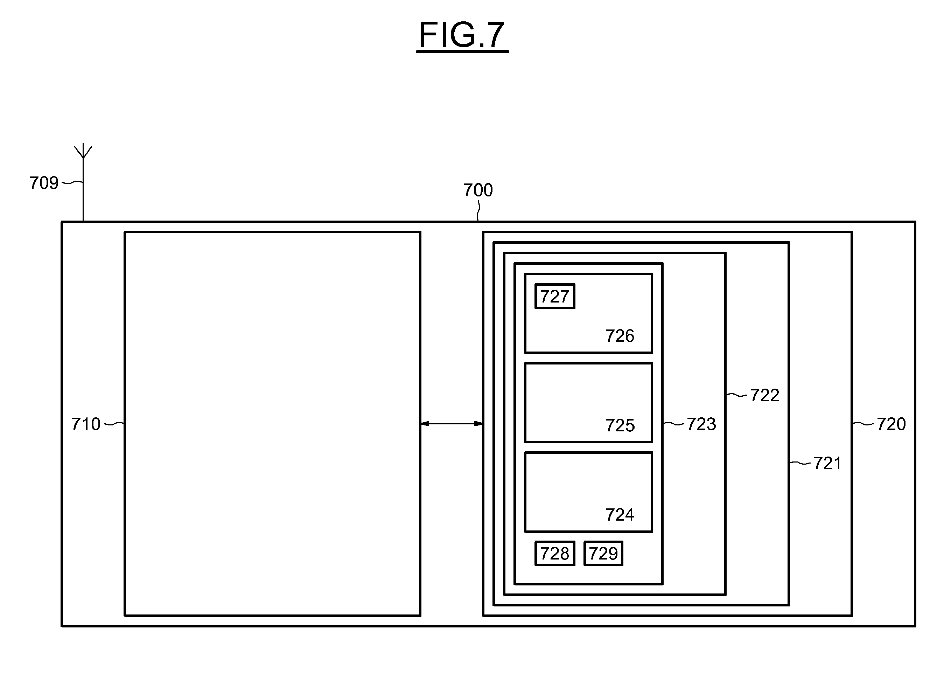

Figure 7 illustrates diagrammatically a wireless apparatus including a device 722 capable of implementing a curve fitting process according to the above-described method. This device may be also incorporated in a software manner in the base-band processor of the wireless apparatus of figure 3. The device comprises processing means 723 for determining SINR using curve fitting.

The processing means 723 comprise selection means 724 for selecting a set of samples from the reception means, first calculation means 725 for performing an average calculation and second calculation means 726 for performing a variance calculation.

The first calculation and/or said second calculation means, respectively 725, 726, are configured to use only the selected set of samples from the selection means 724.

In one embodiment, the selection means 724 can be configured to withdraw the samples subjected to interference intersymbol for obtaining at least one group of samples. The second calculation means 726 can then comprise means 727 for curve fitting the said at least one group of samples with minimum squared error.

Advantageously, the means 727 for curve fitting can be configured to curve fit the said at least one group of samples with a Gaussian.

According to another embodiment, the processing means 723 can comprise third calculation means 728 for performing a supplementary average calculation of the said at least one group of samples. This calculation is done using the variance calculated by the second calculation means 726.

Finally, the processing means 723 can also comprise control means 729 for iteratively activating the means 727 for curve fitting and the third calculation means 728.

The device, the processing means comprised and the others means described above may be realized by software modules within the base-band processor.

**Claims**

1. Method for estimating a signal to interference plus noise ratio, called SINR, of an incident signal on a time interval, comprising receiving samples of said incident signal during said time interval and determining said SINR (204, 405) from said received samples using an average calculation (202, 401) and a variance calculation (203, 404), **characterized in that** said determining step comprises selecting (201, 402) a set of samples from said received samples and performing said average calculation and/or said variance calculation (202, 203, 401, 404) by using said selected set of samples only.

2. Method according to claim 1, wherein said incident signal is a modulated signal and both said average calculation and said variance calculation are performed using said selected set of samples only, maximum likelihood values of said samples obtained from the position of said samples in the modulation constellation and a known sequence of transmitted reference samples.

3. Method according to claim 2, wherein said selection step (201) is performed iteratively until the difference between the current average value of samples calculated on a current selected set of samples and the preceding average value of samples calculated on the preceding selected set of samples is smaller than a threshold.

4. Method according to claim 1, wherein said selecting step (402) comprises withdrawing samples subjected to interference intersymbol for obtaining at least one group of samples, and said variance calculation is based on a curve fitting (403) with minimum squared error on said at least one group of samples.

5. Method according to claim 4, wherein said curve is a Gaussian.

6. Method according to claim 4 or 5 wherein a supplementary average calculation (404) of at least one group of samples is performed using the result of said variance calculation.

7. Method according to claim 6 wherein said curve fitting step (403) and said supplementary average calculation (404) are performed iteratively, a current variance calculation using the result of a preceding supplementary average calculation.

8. Device (322, 722) for estimating a signal to interference plus noise ratio, called SINR, of an incident signal on a time interval, comprising:

   reception means for receiving samples of said incident signal during said time interval
   processing means (323, 723) for determining SINR from said received samples said processing means comprising first calculation means (325, 725) for performing an average calculation and second calculation means (326, 726) for performing a variance calculation
   **characterized in that**
   said processing means (323, 723) comprise selection means (324, 724) for selecting a set of samples from said received samples and said first calculation and/or said second calculation means (325, 326, 725, 726) are configured to use said selected set of samples only.

9. Device (322) according to claim 8, wherein said incident signal is a modulated signal, and said first and second calculation means (325, 326) are configured to use said selected set of samples, maximum likelihood values of said samples obtained from the position of said samples in the modulation constellation and a known sequence of transmitted reference samples.

10. Device (322) according to claim 9, wherein the selection means (324) comprise comparison means (327) for comparing the difference between a current average value of samples calculated on a current selected set of samples and a preceding average value of samples calculated on a preceding selected set of samples with a threshold and control means (328) configured to activate said selection means until said difference is smaller than said threshold.

**11.** Device (722) according to claim 8, wherein the selection means (724) are configured to withdraw the sample subjected to interference intersymbol for obtaining at least one group of samples, and the second calculation means (726) comprise means (727) for curve fitting said at least one group of samples with minimum squared error.

**12.** Device (722) according to claim 11, wherein the means (727) for curve fitting are configured to curve fit the said at least one group of samples with a Gaussian.

**13.** Device (722) according to claim 11 or 12 wherein the processing means comprises third calculation means (728) for performing a supplementary average calculation of at least one group of samples using the variance calculated by said second calculation means (726)

**14.** Device (722) according to claim 13, wherein the processing means (723) further comprises control means (729) for iteratively activating said means (727) for curve fitting and said third calculation means (728).

**15.** Wireless apparatus (300, 700) comprising a device (322, 722) according to any one of claim 8 to 14.

# FIG.1
## PRIOR ART

# FIG.2

| | |
|---|---|
| Iterative determination of Bsel | 201 |
| Calculation of the average of the sample selected | 202 |
| Calculation of the variance | 203 |
| SINR | 204 |

# FIG.3

EP 2 320 593 A1

# FIG.4

COARSE Calculation of the mean of one slot — 401

Selection of samples — 402

Identification of a groups of sample with a known probability function — 403

Calculation of the variance and the average of the sample selected — 404

SINR — 405

# FIG.5

# FIG.6

FIG.7

EP 2 320 593 A1

Europäisches
Patentamt

European
Patent Office

Office européen
des brevets

# EUROPEAN SEARCH REPORT

Application Number

EP 09 30 6070

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | YUNFEI CHEN ET AL: "Maximum likelihood snr estimators for digital receivers" COMMUNICATIONS, COMPUTERS AND SIGNAL PROCESSING, 2005. PACRIM. 2005 IE EE PACIFIC RIM CONFERENCE ON VICTORIA, BC, CANADA 24-26 AUG., 2005, PISCATAWAY, NJ, USA,IEEE, 24 August 2005 (2005-08-24), pages 637-640, XP010841527 ISBN: 978-0-7803-9195-6 | 1,2,4-6, 8,9, 11-13,15 | INV. H04L1/20 H04B1/10 |
| A | * section 3 and 4 *figures 1,2 | 3,7,10, 14 | |
| Y | GAGLIARDI R ET AL: "PCM Data Reliability Monitoring Through Estimation of Signal-to-Noise Ratio" IEEE TRANSACTIONS ON COMMUNICATION TECHNOLOGY, IEEE, USA, vol. 12, no. 3, 1 June 1968 (1968-06-01), pages 479-486, XP011218147 ISSN: 0018-9332 | 1,2,4-6, 8,9, 11-13,15 | |
| A | * section III anf IV * | 3,7,10, 14 | TECHNICAL FIELDS SEARCHED (IPC) |
| A | GANHUA YE ET AL: "Revised SNR Estimator in DSSS Receiver Based on Curve Fitting" IMAGE AND SIGNAL PROCESSING, 2009. CISP '09. 2ND INTERNATIONAL CONGRESS ON, IEEE, PISCATAWAY, NJ, USA, 17 October 2009 (2009-10-17), pages 1-3, XP031555913 ISBN: 978-1-4244-4129-7 * section IV * | 1-15 | H04L H04B |

The present search report has been drawn up for all claims

| Place of search | Date of completion of the search | Examiner |
|---|---|---|
| Munich | 27 April 2010 | Agudo Cortada, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)